## Europäisches Patentamt
## European Patent Office
## Office européen des brevets

(19)

(11) Publication number: **0 110 462**
.B1

(12) **EUROPEAN PATENT SPECIFICATION**

(45) Date of publication of patent specification: **25.05.88**

(51) Int. Cl.⁴: **A 61 C 8/00**

(21) Application number: **83201597.8**

(22) Date of filing: **15.11.83**

(54) A support structure for a submaxillary denture.

(30) Priority: **01.12.82 NL 8204659**

(43) Date of publication of application:
**13.06.84 Bulletin 84/24**

(45) Publication of the grant of the patent:
**25.05.88 Bulletin 88/21**

(84) Designated Contracting States:
**AT BE CH DE FR GB IT LI LU NL SE**

(56) References cited:
**DE-A-1 020 439**
**FR-A-1 327 205**
**US-A-3 748 739**
**US-A-3 895 444**
**US-A-4 325 373**

(73) Proprietor: **Bosker, Hans**
**Essen 14**
**NL-9751 NC Haren (NL)**

(72) Inventor: **Bosker, Hans**
**Essen 14**
**NL-9751 NC Haren (NL)**

(74) Representative: **Kooy, Leendert Willem et al**
**OCTROOIBUREAU VRIESENDORP & GAADE**
**P.O. Box 266**
**NL-2501 AW The Hague (NL)**

Courier Press, Leamington Spa, England.

## Description

The invention relates to a support structure for supporting a submaxillary denture on the lower jaw-bone and comprising

—a base plate which is formed of an arcuate metal strip having an intermediate curved portion and which is adapted to be fixedly abutted against the lower face of the lower jaw-bone; and

—a set of screw-threaded posts to stand on said intermediate curved portion for retaining and anchoring said submaxillary denture, said set of posts being adapted to extend from below through holes in the lower jaw-bone.

US—A—3 895 444 discloses a similar support structure for retaining and anchoring a submaxillary denture against accidental displacement with respect to the lower jaw-bone. The known structure comprises a unitary staple having a set of two parallely orientated posts to extend from below through parallel holes in the lower jaw-bone. The free ends of the two posts provide for anchorage at opposite locations across the lower jaw-bone. The requirement of parallel holes however, necessitates that each staple is adapted to its individual use. Even if its base plate may have a standard size, the positions of the posts on such base plate cannot be standardized.

DE—A—1 020 439 discloses a support structure comprising a base plate which is formed of an arcuate metal strip which is adapted to be fixedly adjoined to the upper face of the lower jaw-bone, a set of four posts and a set of cortical crews. The arcuate strip is a perforated and compliant one. The known structure provides a subperiosteal hold for each post that projects directly from the strip into the oral cavity. The four posts along an arcuate line define a platform loading the top of the lower jaw-bone. Thus, however, the jaw-bone tissue will be loaded locally and is apt to be overloaded with a concurrent resorption of bone tissue.

US—A—3 748 739 discloses a support structure comprising a set of four posts to extend upwards from the bone tissue, a bridging means and fixing means to fix said bridging means to the posts. The posts are to find a hold in the jaw-bone tissue. Again local resorption of tissue is imminent.

According to the invention a support structure for supporting a submaxillary denture on the lower jaw-bone and comprising

—a base plate which is formed of an arcute metal strip having an intermediate curved portion and which is adapted to be fixedly abutted against the lower face of the lower jaw-bone; and

—a set of screw-threaded posts to stand on said intermediate curved portion for retaining and anchoring said submaxillary denture, said set of posts being adapted to extend from below through holes in the lower jaw-bone,

is characterized in that said set of posts comprises four detached post screws, each including a shank having an external cortical screw thread to fix the post screw in the lower jaw-bone, an internal screw thread at its base end and an external thread at its head end;

in that said intermediate curved portion of the arcuate metal strip comprises along its centre line four evenly spaced apertures to receive a fastener means for fixing the base plate to the base ends of said post screws;

in that the structure further comprises a set of at least five cortical screws to adjoin said base plate fixedly to the lower face of the lower jaw-bone, a bridging means comprising hooking means to be engaged by coupling means included in the submaxillary denture and fixing means for each of said shanks to fix said bridging means to the head ends of the shanks;

in that the base plate comprises further apertures at locations on each side of the apertures for the posts, each further aperture to receive one of the cortical screws; and

in that the centre line of the intermediate curved portion of the base plate in plan view is an arc across a chord 34 mm in length, the arc having a height above the chord of 8 or 10 mm.

The support structure according to the invention thus includes the option to locate and direct each of the posts with respect to the base plate so that its load as a result of chewing or biting can be transferred into and along the natural load absorbing zones in the bone tissue. The base plate and other parts of the structure can be of standard size, whereas the top ridge of the lower jaw-bone is not. The structure as a whole will distribute the load experienced such that the pressure exerted on the bone tissue cannot cause resorption thereof.

·Advantageously, the base plate, the posts, the cortical crews and the bridging emans are made up of a gold/platinum alloy 18—5 (18 carat gold with 5% platinum). This material combines mechanical strength with ductility and is compatible with the various tissue and body fluids with which the system in situ gets into contact.

The structure according to the invention will be illustrated in a description of the preferred embodiment with reference to a drawing, wherein

Fig. 1 shows an isometric view of the assembled structure according to its preferred embodiment;

Fig. 2 shows a plan view of a base plate in the assembly according to Fig. 1;

Fig. 3 shows a plan view of a further base plate in the assembly according to Fig. 1;

Fig. 4 shows an elevation of the base plate according to Fig. 2;

Fig. 5 shows a post in the assembly according to Fig. 1;

Fig. 6 shows an embodiment of the bridging means comprised in the structure according to the invention; and

Fig. 7 shows a cross-section of a beam comprised in the bridging means.

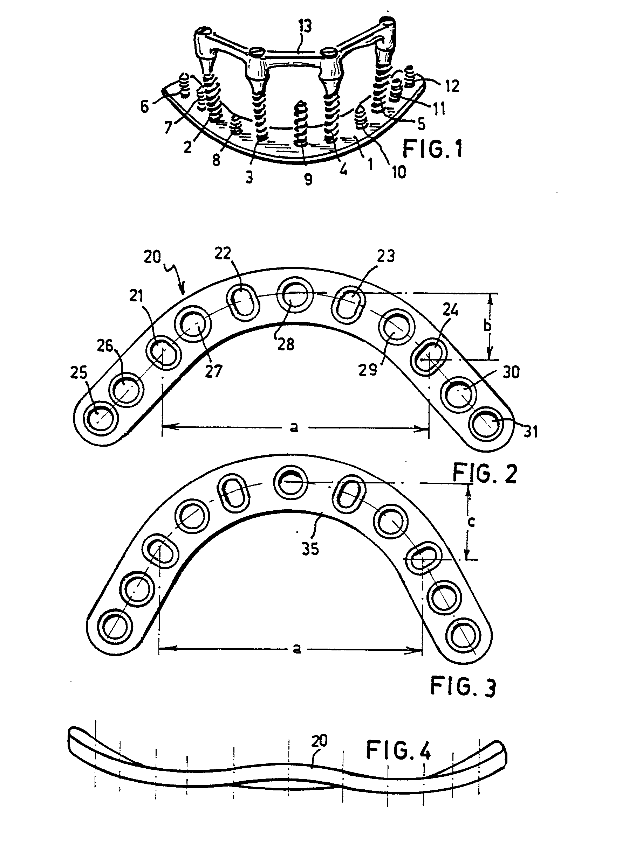

Fig. 1 is a drawing derived from a photograph and shows a view of the assembly according to a first preferred embodiment comprising the base plate 1, four post screws 2, 3, 4 and 5 and seven cortical screws 6 up to and including 12, and the assembled bridging means 13 such as the assembly would look, when mounted in the lower jaw. The drawing is somewhat larger than actual size.

In Fig. 2 a base plate for an adult male person is drawn in plan view about twice as large as actual size. The four locations each for fixing a post are centered on the centerline of the gold alloy 18—5 strip 20 forming the base plate. In between the extreme locations for a post the centerline forms an arc across a chord *a* of 34 mm in length with a height *b* of 8 mm. For fixing the posts elongated apertures 21 through 24 are arranged at the locations to secure same, the longitudinal directions of said apertures pointing to the center of said arc. Each of the elongated apertures 21 through 24 is to receive a screw to fix the post onto the base plate. Around each aperture a bevel is made in the material of the metal strip 20 in order to deal with an oblique position of the post, if any, with respect to the base plate using a screw head adapted to the bevel.

Furthermore the base plate comprises circular apertures 25 through 31 for receiving cortical screws to adjoin the base plate to the lower face of the lower jaw bone, directly behind the chin ("cortical" refers to the hard rind of the lower jaw bone having a spongy core). The borders of these circular apertures are also bevelled, so that the screw head can at least partly be sunk into the body of the base plate. These circular apertures, seven in number, are arranged at each side of the apertures 21 through 24 for securing a post. The apertures 27, 28 and 29 are centered on the described arc. The apertures 25, 26 and 30, 31 are respectively arranged in one of two wing portions of the base plate, their centerline being tangent to the arc.

Fig. 3 shows a metal strip 35 in the embodiment for adult female persons. The arrangement is similar to the arrangement of the metal strip 20 shown in Fig. 2 provided the height *c* of the arc across the chord *a* is 10 mm in length.

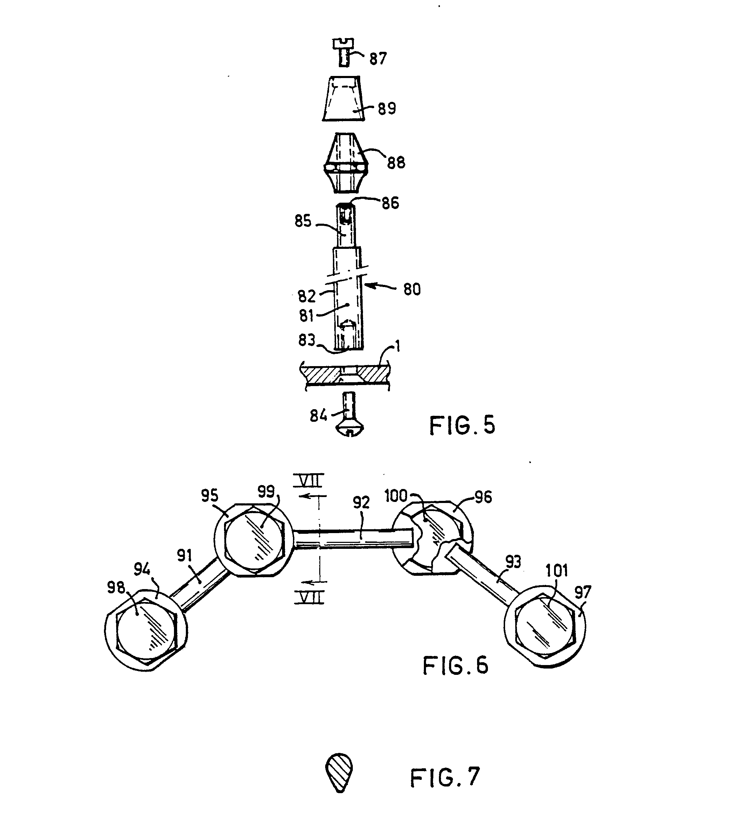

Fig. 4 shows the base plate according to Fig. 2 in a view perpendicular to the view in Fig. 2. The plane of metal strip 20 is symmetrically curved to adapt the shape of the lower face of the lower jaw bone.

Just as a result of the curved shape the posts will always stand in a somewhat oblique position with respect to the base plate. The shape indicated in Fig. 4 is a standard shape which is the same for all adult male persons. The shape of the base plate for adult female persons is also a standard shape.

Fig. 5 shows an exploded view of an embodiment of post 80 such as shown assembled in Fig. 1. In the shank of a post screw 81 with external thread 82 an internally threaded aperture 83 for a connecting screw 84 is arranged at its base to be connected with the base plate 1 (Fig. 1). The head end 85 of the shank of post screw 81 is threaded having in its top face a recess 86 with internal thread adapted to a terminal screw 87. The length of threaded head end 85 is sufficient to accomodate a two-piece collar comprising two collar pieces 88, 89 to be placed successively on the head end of the post, the collar piece to be arranged firstly having an internal thread fitting the external thread of the head end of the post, the collar piece to be arranged secondly on the head end of the post being secured by the locking screw 87. The upper collar piece 89 of the collar to be placed secondly is an element of the bridging means 13 (Fig. 1). One or two bridges are soldered to the upper collar piece 89 after determining their size in situ.

The lower collar piece 88 is made up with a conical top face and an internal thread fitting the head end thread 85. The upper collar piece 89 is made up with a recess concurrent with the conical top face of the lower collar piece 88. Thus the upper collar piece can be temporarily left out, to wit for constructing the bridging means after measuring the respective bridge sizes without having the respective screw ends forming the same number of inconvenient obstacles in the oral cavity. The inconvenience is prevented by the body of the lower collar piece which extends up to the top face of the threaded end.

In Fig. 6 a preferred embodiment of the bridging means is shown. In this embodiment the bridging means can be mounted directly on the posts. The ends of beam pieces 91, 92, 93 are received in notches in the lower collar piece and are locked therein by the upper collar pieces 94, 95, 96, 97 respectively. Finally the collar is secured with terminal locking screws 98, 99, 100, 101 respectively.

The beam pieces 91, 92, 93 (Fig. 7) preferably have drop shapes in cross-section and are cut to size and arranged in one movement with the surgical operation in which the posts and the base plate are set. The beam pieces are hooking means for coupling means included in a submaxillary denture.

Each post having such a length that the bridging means is situated freely in the oral cavity in order to enable engagement of a submaxillary denture. The drop shape of the perpendicular cross-section of the beam pieces (Fig. 7) is precisely selected in view of said engagement.

In a variation of the preferred embodiment widenings are provided at the beam piece ends which are received in concurrent recesses at the ends of the notches in the lower collar piece.

Preferably all the parts of the support system are made up of 18—5 gold that is 18-carat gold alloyed with 5% platinum. This alloy is compatible with body-tissue and body fluids and has the desired characteristics as to ductility and strength.

The support system according to the invention permits standardisation to a high degree. The time needed for arranging the parts of the support system in the lower jaw bone can be limited as a result. This is of great importance, quite a significant surgical operation being discussed here. The only parts to be present in various length sizes are the post screws and the long cortical screws to be placed between said post screws.

## Claim

A support structure for supporting a submaxillary denture on the lower jaw-bone and comprising

—a base plate (1) which is formed of an arcuate metal strip (20, 35) having an intermediate curved portion and which is adapted to be fixedly abutted against the lower face of the lower jaw-bone; and

—a set of screw-threaded posts (2, 5) to stand on said intermediate curved portion for retaining and anchoring said submaxillary denture, said set of posts being adapted to extend from below through holes in the lower jaw-bone,

characterized in that said set of posts comprises four detached post screws (2—5), each including a shank (81) having an external cortical screw thread (82) to fix the post screw in the lower jaw-bone, an internal screw thread (83) at its base end and an external thread at its head end (85);

in that said intermediate curved portion of the arcuate metal strip (20, 35) comprises along its centre line four evenly spaced apertures (21—24) to receive a fastener means (84) for fixing the base plate (1) to the base ends of said post screws (2—5);

in that the structure further comprises a set of at least five cortical screws (6—12) to adjoin said base plate fixedly to the lower face of the lower jaw-bone, a bridging means (13, 89, 91—97) comprising hooking means (91—93) to be engaged by coupling means included in the submaxillary denture and fixing means (87, 88, 98—101) for each of said shanks (81) to fix said bridging means to the head ends (85) of the shanks;

in that the base plate (1) comprises further apertures (25—31) at locations on each side of the apertures (21—24) for the posts (2—5), each further aperture to receive one of the cortical screws (6—12);

and in that the centre line of the intermediate curved portion of the base plate (1) in plan view is an arc across a chord (a) 34 mm in length, the arc having a height (b, c) above the chord of 8 or 10 mm.

## Patentanspruch

Trag- und Verankerungsvorrichtung für das Aufnehmen und Verankern eines Unterkiefergebisses auf dem Unterkieferknochen umfassend

—eine Grundplatte (1), die aus einem bogenförmigen Metallstreifen (20, 35) geformt ist, der einen mittleren gebogenen Teil aufweist, und die für ein Anliegen an der Unterseite des Unterkieferknoches angepaßt ist; und

—einen Satz von mit Schraubengewinde versehenen Haltepfeilern (2, 5), die auf dem mittleren gebogennen Teil zur Halterung und Verankerung des Unterkiefergebisses stehen, wobei diese Haltepfeiler für ein Durchgreifen durch Löcher in dem Unterkieferknochen von unten her ausgebildet sind,

dadurch gekennzeichnet, daß der Satz von Haltepfeilern vier freistehende Haltepfeilerschrauben (2—5) umfaßt, von denen jede einen Schaft (81), der ein äußeres Corticalschraubengewinde (82) aufweist, um die Haltepfeilerschrauben in dem Unterkiefer zu befestigen, eine Innengewindebohrung (83) an seinem unteren Ende und ein Außengewinde an seinem Kopfende (85) aufweist;

daß der mittlere gebogene Teil des bogenförmigen Metallstreifens (20, 35) entlang seiner Mittellinie vier mit gleichem Abstand verteilte Öffnungen (21—24) für die Aufnahme von Befestigungselementen (84) zur Befestigung der Grundplatte (1) an dem unteren Ende der Haltepfeilerschrauben (2—5) aufweist;

daß die Vorrichtung weiterhin einen Satz von zumindest fünf Corticalschrauben (6—12) für die feste Anlage der Grundplatte (1) an der Unterseite des Unterkieferknoches, einen Brückenteil (13, 89, 91—97, das Befestigungsteile (91—93) für das Zusammenwirken mit Kupplungsteilen umfaßt, die am Unterkiefergebiß vorgesehen sind und Befestigungsteile (87, 88, 89—101) für jeden Schaft (81) zur Befestigung des Brückenteiles an den Kopfenden der Schafte aufweist;

daß die Grundplatte (1) weiterhin Öffnungen (25—31) an Stellen zu beiden Seiten der Öffnungen (21—24) für die Haltepfeiler (2—5) aufweist, die jeweils für die Aufnahme einer Corticalschraube (6—12) vorgesehen sind; und

daß die Mittellinie des mittleren gebogenen Teils der Grundplatte (1) in Draufsicht einen Bogen über einer Sehne (a) mit 34 mm Länge darstellt, wobei der Bogen einen Höhe (b, c) über der Sehne von 8 oder 10 mm hat.

## Revendication

1. Dispositif destiné à supporter une prothèse dentaire du maxillaire inférieur, comprenant:

—une embase (1) constituée d'une bande métallique arquée (20, 35) présentant une partie intermédiaire courbe, propre à porter rigidement contre la face inférieure du maxillaire inférieur, et

—un jeu de goujons filetés (2, 5) solidaires de la partie courbe de l'embase et destinés à fixer et à maintenir ladite prothèse du maxillaire inférieur, lesdits goujons s'étendant de bas en haut à travers des trous pratiqués dans le maxillaire inférieur,

caractérisé en ce que ledit jeu de goujons est composé de quatre goujons séparés (2—5) constitués chacun d'un fût (81) présentant un filetage extérieur cortical (82) servant à fixer le goujon fileté dans le maxillaire inférieur, un filetage interne (83) à sa partie inférieure et un filetage externe (85) à sa partie supérieure;

en ce que ladite partie intermédiaire courbe de la bande métallique arquée (20, 35) comporte le long de son axe quatre perçages régulièrement espacés (21—24) servant à recevoir les moyens de fixation (84) de l'embase (1) sur les extrémités inférieures desdits goujons filetés (2—5); en ce que le dispositif comprend en outre un jeu d'au moins cinq vis corticales (6—12) servant à relier de manière fixe ladite embase à la face inférieure du maxillaire inférieur, un pontet (13, 89, 91—97) comprenant des moyens d'accrochage (91—93) reliés à la prothèse du maxillaire inférieur par des moyens d'accouplement prévus dans celle-ci et par les moyens de fixation (87, 88, 98—101) de chacun desdits fûts (81) des goujons et se fixant sur les extrémités supérieures (85) des fûts;

en ce que l'embase (1) comporte en outre des ouvertures supplémentaires (25—31) situées de part et d'autre des perçages (21—24) prévus pour les goujons (2—5), chacune des ouvertures supplémentaires étant destinée à accueillir une des vis corticales (6—12);

et en ce que l'axe de la partie intermediaire courbe de l'embase (1) forme en plan un arc dont la corde (a) présente une longueur de 34 mm, la flèche (b, c) mesurant de 8 ou 10 mm.

FIG.1

FIG. 2

FIG. 3

FIG.4

FIG.5

FIG.6

FIG.7